(19)

Europäisches Patentamt
European Patent Office
Office européen des brevets

(11)  **EP 2 546 759 A1**

(12)  **EUROPEAN PATENT APPLICATION**

(43) Date of publication:
**16.01.2013 Bulletin 2013/03**

(51) Int Cl.:
*G06F 17/11* (2006.01)     *G06F 17/30* (2006.01)
*G06Q 30/02* (2012.01)

(21) Application number: **11174265.6**

(22) Date of filing: **15.07.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Meshalkina, Yulia**<br>**Hoofddorp (NL)**<br><br>(74) Representative: **Pelly, Jason Charles et al**<br>**Boult Wade Tennant**<br>**Verulam Gardens**<br>**70 Gray's Inn Road**<br>**London WC1X 8BT (GB)** |
| (71) Applicant: **Irdeto Corporate B.V.**<br>**2132 LS  Hoofddorp (NL)** | |

(54)  **Generation of recommendation values**

(57)  There is described a method of generating a recommendation value for a specific user-item pair based on known recommendation values for other user-item pairs. A user-item pair corresponds to one of m users and one of n items such that the recommendation value for said specific user-item pair is a recommendation value of a specific item of the n items for a specific user of the m users. Each user of the m users is associated with a corresponding user vector. Each item of the n items is associated with a corresponding item vector. The method comprises the steps of: generating the user vector associated with the specific user; generating the item vector associated with the specific item; and generating the recommendation value for the specific user-item pair based on a dot product of the user vector associated with the specific user and the item vector associated with the specific item. The method includes steps (a) to (c) for each stage in a series of stages. Step (a) involves identifying selected users from the m users and selected items from the n items so as to define a subset of user-item pairs that has a given density of known recommendation values. At each subsequent stage, the density of known recommendation values in the subset is reduced. For each selected user that has not been selected in any preceding stages, step (b) involves calculating the associated user vector based on known recommendation values for user-item pairs in the subset corresponding to said selected user and based on any corresponding item vectors calculated in any preceding stages. For each selected item that has not been selected in any preceding stages, step (c) involves calculating the associated item vector based on known recommendation values for user-item pairs in the subset corresponding to said selected item and based on any corresponding user vectors calculated in any preceding stages.

Figure 5

$$A = \begin{pmatrix} I & V^T \\ U & R \end{pmatrix} = \begin{pmatrix} I & V_1^T & V_2^T & \cdots \\ U_1 & B_1 & j & \\ U_2 & i & B_2 & \\ \cdots & \cdots & & \end{pmatrix}$$

EP 2 546 759 A1

**Description**

**Field of the invention**

The present invention relates to a method of generating a recommendation value for a specific user-item pair based on known recommendation values for other user-item pairs. A user-item pair consists of one of m users and one of n items such that the recommendation value for the specific user-item pair is a recommendation value of a specific item for a specific user. Such recommendation values may be used in many recommender systems.

**Background of the invention**

Recommender systems generate recommendations in terms of items that are likely to be of interest to a particular user. For rating based recommender systems, ratings data is stored in the users-items matrix. In general, only a fraction of this matrix is filled. From this data, the system should be able to predict the remaining ratings in terms of recommendation values. Matrix Factorisation techniques as a realisation of latent factor models are no stranger to rating based recommender systems. As a mathematical technique, matrix factorisation is defined for completely filled matrices. Its extension for partly filled matrices implies the restoration of large parts of missing data, leading to an optimisation problem for which the choice of constraints is a major issue.

Matrix factorisation techniques as a realisation of latent factor models are used in the development of many recommender systems. For example, see "Learning collaborative information filters" by Billsus and Pazzani (International Conference on Machine Learning, Morgan Kaufmann Publishers, 1998), "Adaptive interfaces for ubiquitous web access" by Billsus et al. (Communications of the ACM, 45(5):34-38, 2002), or "The BellKor 2009 Solution to the Netflix Grand Prize" by Koren (August 2009, available online at http://www.netflixprize.com). In latent factor models users and items are supposed to be represented by vectors in $\mathbf{R}^m$ and $\mathbf{R}^n$ in terms of the known ratings. From the known ratings, these techniques produce factors and cofactors that characterise both an item and a user. Factors describe user features and cofactors describe item features. Matrix factorisation maps both user and item vectors to a latent factor space. The factors space is spanned by the principal factors and the cofactor space by the principal cofactors. Both these spaces have the same dimension that is equal to the number of principal (co)factors.

The data may be imagined as a cloud. The position and the shape of the cloud are determined by the centre of mass and the principal axes/components. A reference frame is attached to the cloud's centre of mass. Covariance matrix determines the principal components. If the variation is high in k dimensions and low in others then the data may effectively be viewed as a k-dimensional cloud. Thus, the cloud is represented by its projections onto the one dimensional spaces determined by the principal components.

Every rating matrix determines two clouds where corresponding principal components are factors and cofactors and the variations are described by the singular values. Knowing the singular values, principal factors and cofactors, the matrix can be reproduced; this is the essence of singular value decomposition.

The main advantage of projections is that the system may be described with a smaller number of variables while the main information is still in the database. The dimensionality of the problem is reduced by putting to zeros singular values that are less than a certain threshold.

In practice, the rating matrix is represented as a sum of one rank matrices. Each matrix corresponds to one (co)factor. The number of factors is reduced by removing the non-essential factors. The larger the inner product of the corresponding factor and the user vector, the more this feature relates to this user. Thus users and items can be compared easily as all of them are expressed in terms of common (co)factors. A drawback is that it is not easy to interpret the factors and cofactors.

If it is possible to find the factors and cofactors such that sum of their tensor products (one rank matrices) approximates the known ratings, then simultaneously this sum of products gives an estimation of the missing ratings. This yields a non-linear optimisation problem. There are some iterative methods available that allow solving this non-linear optimisation problem. A typical aspect of a non-linear optimisation problem is that mainly heuristic solution procedures are available that do not guarantee to find the global optimum. Thus local optima can occur. An other aspect of the solution procedures is that the resulting optimum is very much dependent on the choice of the starting point. Moreover, due to the sparsity of the rating matrix the corresponding optimisation problem is underdetermined and the solution is not unique. Thus, it is necessary to define a set of constraints and specify the objective function.

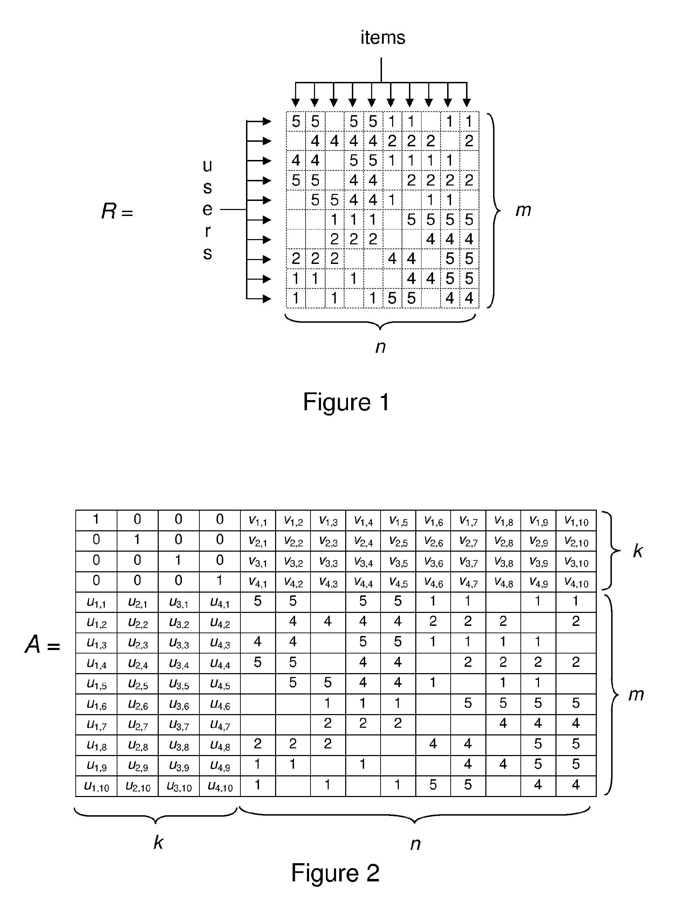

One state of the art approach will now be described mathematically. There are m users and n items in the system. R is an m x n rating matrix that is partly filled with user ratings. An example is shown in Figure 1 where the system has m =10 users and n =10 items. Only 27% of the ratings are known in the example of Figure 1. In the sparsely filled matrix $R$, $r_{ij}$ is known only if user i rated item j. The set of observed ratings is denoted by $K$, so $K = \{(i, j, r_{ij}) \mid r_{ij}$ is known} is relatively small.

Factors are denoted by $\mathbf{u}_l \in \mathbf{R}^m$ and cofactors by $\mathbf{v}_l \in \mathbf{R}^n$, $l= 1 \ldots k$. If the factors and cofactors are known, the dot product (or scalar product) of k-dimensional vectors composed of corresponding entries of $\mathbf{u}_l$ and $\mathbf{v}_l$ gives the user-item relations or ratings:

$$r_{ij} = \sum_{l=1}^{k} u_{li} v_{lj}$$

In an existing approach that is used for generating a prediction, the difference between the known entries of the sparsely filled matrix R and the product of factors $\mathbf{u}_l$ and cofactors $\mathbf{v}_l$ is minimised as follows:

$$\min_{u_k, v_{k,k}} \sum_{(r_{ij} \in K)} \left( r_{ij} - \sum_{l=1}^{k} u_{li} v_{lj} \right)^2 \tag{1}$$

Tikhonov regularisation is used to prevent overfitting:

$$\sum_{r_{ij} \in K} \left( r_{ij} - \sum_{l=1}^{k} u_{li} v_{lj} \right)^2 + \lambda \sum_{l=1}^{k} \left( \sum_{i=1}^{m} u_{li}^2 + \sum_{j=1}^{n} v_{lj}^2 \right) \rightarrow \min \tag{2}$$

where $\lambda$ controls the regularisation: the larger $\lambda$, the more emphasis is put on the regularisation term.

The optimisation can be solved by a stochastic gradient descent or alternating least squares. See, for example, "The BellKor 2009 Solution to the Netflix Grand Prize" by Koren (August 2009, available online at http://www.netflixprize.com). Usually an implementation contains a loop through the *k* factors. For each known rating $r_{ij}$, at each iteration step s, the system computes the prediction error:

$$e_{ij} = r_{ij} - \sum_{l=1}^{k} u_{li} v_{lj}$$

and modifies the parameters in the opposite direction of the gradient:

$$v_{lj}^{s+1} = v_{lj}^{s} + \alpha(e_{ij} u_{li}^{s} - \lambda v_{lj}^{s})$$

$$u_{li}^{s+1} = u_{li}^{s} + \alpha(e_{ij} v_{lj}^{s} - \lambda u_{li}^{s})$$

where $\alpha$ is the learning rate and $\lambda$ is a Tikhonov regularisation parameter. Both parameters take values between zero and one, which can be chosen experimentally. The initial values $\mathbf{u}_l^0$ and $\mathbf{v}_l^0$ can be taken randomly. The existing methods start with subtracting averages from the real values and then solving the optimisation problem. See "The BellKor 2008 Solution to the Netflix Prize" by Bell et al. (2008, available online at: http://www.netflixprize.com). This kind of approach gives accurately predicted results but the consequence is that the predicted values stay close to the averages. Whilst the averages yield a relatively good prediction in terms of statistical errors, that kind of prediction is definitely far from the practical goal of a recommender system. It is not desirable to predict averages; it is desirable to have the opportunity to distinguish "good" items from "bad". Moreover, matrix factorisation techniques assume that there is linear dependence among rows and among columns. The deviation from the average should be covered by this dependence. If one rating row has a higher average than the others, it can be expressed by a simple linear relation.

The optimisation problem is undetermined because the data set is sparsely filled. The existing approach does not distinguish users with a lot of ratings from users with fewer ratings. Another aspect of the problem is initialisation. An optimisation procedure might easily lead to a local optimum. Thus it is necessary to define a set of constraints and specify the objective function. Also, how to determine the rank k is a problem in existing approaches.

The present invention seeks to provide an alternative way of generating (or predicting) unknown recommendation values which provides various advantages over the approaches of the prior art.

**Summary of the invention**

According to a first aspect of the invention, there is provided a method of generating a recommendation value for a specific user-item pair based on known recommendation values for other user-item pairs. A user-item pair corresponds to one of m users and one of n items such that the recommendation value for said specific user-item pair is a recommendation value of a specific item of the n items for a specific user of the m users. Each user of the m users is associated with a corresponding user vector. Each item of the n items is associated with a corresponding item vector. The method comprises the steps of: generating the user vector associated with the specific user; generating the item vector associated with the specific item; and generating the recommendation value for the specific user-item pair based on a dot product of the user vector associated with the specific user and the item vector associated with the specific item. The method includes the following steps (a) to (c) for each stage in a series of stages. Each stage has a respective item threshold value and a respective user threshold value. The item threshold value for a stage is less than the item threshold values for any preceding stages, and the user threshold value for a stage is less than the user threshold values for any preceding stages. Step (a) involves identifying selected users from the m users and selected items from the n items so as to define a subset of user-item pairs. For each selected user, the number of corresponding known recommendation values for user-item pairs in the subset is greater than the user threshold value. Also, for each selected item, the number of corresponding known recommendation values for user-item pairs in the subset is greater than the item threshold value. For each selected user that has not been selected in any preceding stages, step (b) involves calculating the associated user vector based on known recommendation values for user-item pairs in the subset corresponding to said selected user and based on any corresponding item vectors calculated in any preceding stages. For each selected item that has not been selected in any preceding stages, step (c) involves calculating the associated item vector based on known recommendation values for user-item pairs in the subset corresponding to said selected item and based on any corresponding user vectors calculated in any preceding stages.

Thus, the method of the present invention splits the optimisation problem into a series of stages. Each stage helps to build up a full prediction model that is able to generate recommendation values for specific user-item pairs. The first stage uses a block (i.e. subset) of data from an area of user-item space that is more densely populated with known representation values (i.e. ratings). Parameters (i.e. user vectors and item vectors) relating to the more densely populated users and items are fixed during the first stage in the series. The second stage uses a block of data with a lower threshold for the level of population of known representation values in the user-item space. Previously calculated parameters (i.e. user vectors and item vectors) are used to help calculate other similar parameters for users and items which fall into the second, less-densely populated data block. Calculation of parameters in subsequent stages does not affect the parameters which were calculated in any previous stages using more densely populated data. Splitting the data into blocks reduces the uncertainty of the problem and provides a new iterative method of solving such optimisation problems. An important consideration for any prediction is the quality. Intuitively, more densely filled data should produce a more reliable prediction, and this concept has been used in the present methodology. The present methodology also allows the introduction of the concept of reliability in terms of the density of the data.

In one embodiment, for at least one stage in the series, in the step (a), for each unselected *user,* the number of known recommendation values for user-item pairs not in the subset is less than or equal to the user threshold value, and for each unselected *item,* the number of known recommendation values for user-item pairs not in the subset is less than or equal to the item threshold value. The unselected users are the users from the m users that are not selected to define the subset of user-item pairs. The unselected items are the items from the n items that are not selected to define the subset of user-item pairs. More advantageously, this methodology is used for *each* stage in the series. In this advantageous embodiment, the first stage of the series uses all of the areas of user-item space that are most densely populated with known recommendation values. The second stage additionally encompasses all of the slightly less densely populated areas of user-item space, and so on. Thus, this embodiment will generally yield very high quality predictions of recommendation values for given user-item pairs.

For at least one stage in the series, the steps (b) and (c) may together comprise minimising the difference between: 1) known recommendation values for each user-item pair in the subset, and 2) corresponding dot products of the user vectors for the selected users and the item vectors for the selected items. Thus, in this embodiment, the method requires a minimisation (or optimisation) problem to be solved at one or more stages in the series. There are many known ways of solving minimisation problems (e.g. least squares, iterative techniques), so this embodiment uses a methodology that is well understood by those skilled in the art.

For at least one stage in the series, there may be one or more iterations of the steps (b) and (c) until a stop criterion is satisfied. Thus, in this embodiment, an iterative technique is used in individual stages as well as to define the stages themselves.

For at least one stage in the series, the plurality of iterations of the steps (b) and (c) may commence with the step (b). In this case, the first iteration of the step (b) further comprises calculating said associated user vector based on randomly initialised item vectors for those selected items that have not been selected in any preceding stages. Alternatively, for at least one stage in the series, the plurality of iterations of the steps (b) and (c) may commence with the step (c). In this case, the first iteration of the step (c) further comprises calculating said associated item vector based on randomly initialised user vectors for those selected users that have not been selected in any preceding stages. Random initialisation is one possible way of initialising the item vectors or user vectors.

For at least one stage in the series, any iterations of the step (b) which follow a previous iteration of the step (c) may further comprise calculating said associated user vector based on item vectors calculated in the previous iteration of the step (c). Similarly, for each stage in the series, any iterations of the step (c) which follow a previous iteration of the step (b) further comprise calculating said associated item vector based on any user vectors calculated in the previous iteration of the step (b). Thus, in these embodiments, the most recently calculated item vectors are used to calculate any user vectors, and the most recently calculated user vectors are used to calculate any item vectors.

The step (b) and/or the step (c) may comprise solving a system of linear equations. Reducing the optimisation problem to a set of linear equations makes it possible to solve accomplish the optimisation in an efficient and easily understandable manner.

In one embodiment, for each stage, the item threshold value is equal to the user threshold value such that only a single threshold value is required for each stage. This is useful for asymmetric data sets. Alternatively, the item threshold value may be different to the user threshold value for a given stage if desired.

In one embodiment, each user vector comprises k elements and each item vector comprises k elements. For at least one stage in the series, the user vectors associated with the selected users and the item vectors associated with the selected items each have a constant number C of elements set to zero, where C is greater than or equal to 1. This enables the dimensionality of the problem to be reduced in one or more of the stages in the series.

The method may further comprise the steps of: receiving a new known recommendation value for a user-item pair, wherein the new known recommendation value affects which users and items are selected in step (a) for each of stages s to S in the series, wherein stage S denotes the final stage in the series; and, for each of stages s to S in the series, performing the steps (a) to (c) again so as to update the calculated user vectors and item vectors based on the new known recommendation value. Thus, the present method can be adapted to the more practical situation of dynamically evolving datasets of recommendation values (i.e. situations where dynamics is involved in the ratings).

According to a second aspect of the present invention, there is provided a computer program which, when executed by a processor, causes the processor to carry out the method of the first aspect.

According to a third aspect of the present invention, there is provided a data carrying medium carrying the computer program of the second aspect. The data carrying medium may be a storage medium or a transmission medium.

According to a fourth aspect of the present invention, there is provided an apparatus comprising a processor, the processor being configured to carry out the method of the first aspect.

## Brief description of the drawings

Embodiments of the invention will now be described, by way of example only, with reference to the accompanying drawings, in which:

Figure 1 shows an exemplary rating matrix R with some ratings known, and other ratings missing.
Figure 2 is an exemplary construction of matrix A using the rating matrix R of Figure 1 and k = 4.
Figure 3 illustrates the components of matrix U that is used in the construction of matrix *A* in Figure 2.
Figure 4 illustrates the components of matrix V that is used in the construction of matrix A in Figure 2.
Figure 5 illustrates the number of variables in the optimisation problem for each block.
Figure 6 schematically illustrates the system of linear equations solved for every column during one iteration of step 2 of the iterative process.

Figure 7 schematically illustrates the system of linear equations solved for every row during one iteration of step 3 of the iterative process.

Figures 8a-8d illustrate the first few steps in an iterative process to solve for U and V for a system with k = 2, m = 9 and n = 9.

Figure 9 shows a comparison of the original data with the final results of the iterative process illustrated in Figure 8.

Figure 10 is a Table showing the minimum number of ratings $p_s$ in every block of the second MovieLens data set which was used for evaluation purposes.

Figure 11 shows Mean Average Error of various evaluated predictions for the second MovieLens data set.

Figure 12 shows Root Mean Square Error of various evaluated predictions for the second MovieLens data set.

Figure 13 schematically illustrates a recommender system according to an embodiment of the invention.

Figure 14 schematically illustrates an example computer system which may be used to form a data processing system forming the whole or a part of the recommender system and/or one or more user computer systems.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

Singular Value Decomposition, Schur Decomposition and a reverse engineering approach are each described briefly below to provide a mathematical background to the described embodiment of the present invention.

### Singular Value Decomposition

Let A be an $m \times n$ completely filled matrix. Its singular value decomposition

$$A = U \Sigma V^T \tag{3}$$

consists of two orthogonal matrices $U_{m \times m}$ and $V_{n \times n}$ and a diagonal matrix. The diagonal matrix $\Sigma$ is an m x n matrix with nonnegative singular values on its diagonal. Assuming decreasing order of the singular values gives a uniquely determined matrix $\Sigma$.

The matrix A is approximated by selecting only the k largest singular values and their corresponding vectors from U and $V$, the so-called k-rank approximation to A. By putting other entries of $\Sigma$ to zero, A may be approximated as follows:

$$A \approx U_1 \Sigma_k V_1^T, \qquad k \ll \min(m, n). \tag{4}$$

where $U_1$ and $V_1$ are appropriate partitions of U and $V$, such that $U_1$ is an m x k matrix and $V_1$ is an n x k matrix. This technique allows reducing the problem dimensions while having a good approximation of the full matrix A.

### Schur Decomposition

Let A be an m x n matrix of rank k such that $A_{11}$ is a $k \times k$ nonzero minor. Then A may be written in the following four-block structure:

$$A = \begin{pmatrix} A_{11} & A_{12} \\ A_{21} & A_{22} \end{pmatrix}_{m \times n} \tag{5}$$

As $A_{11}$ is a $k \times k$ matrix with nonzero determinant, it is an invertible matrix. The Schur decomposition factorises the block matrix into a lower triangle, a block-diagonal, and an upper triangle matrix:

$$A = \begin{pmatrix} I & 0 \\ A_{21}A_{11}^{-1} & I \end{pmatrix} \begin{pmatrix} A_{11} & 0 \\ 0 & A_{22} - A_{21}A_{11}^{-1}A_{12} \end{pmatrix}$$
$$\times \begin{pmatrix} I & A_{11}^{-1}A_{12} \\ 0 & I \end{pmatrix} \qquad (6)$$

where $I$ is the identity matrix. As A is an m x n matrix of rank k, there are only k independent rows/columns. The remaining ($m$ - k) rows and ($n$ - k) columns are dependent and can be written as a linear combination of the k independent rows/columns. Thus, the Schur compliment is equal to zero:

$$A_{22} - A_{21}A_{11}^{-1}A_{12} = 0 \qquad (7)$$

Reverse engineering approach

Now consider the singular value decomposition and Schur decomposition in reverse order. For the completely filled matrix, the rank is always known and a maximal non zero minor (i.e. $A_{11}$) that characterises the matrix can be found. For the sparsely filled matrix, the rank is not known, but suppose that it is known and let it be k. Thus, there exists at least one full rank k x k block; all the blocks of higher dimension are not full rank. Suppose it is possible to find this block. Then this block may be used as $A_{11}$ to construct a block matrix (5). For this block-diagonal matrix the singular value decomposition is the following:

$$\begin{pmatrix} A_{11} & 0 \\ 0 & A_{22} - A_{21}A_{11}^{-1}A_{12} \end{pmatrix}$$
$$= \begin{pmatrix} U_{11} & 0 \\ 0 & I \end{pmatrix} \begin{pmatrix} \Sigma_{11} & 0 \\ 0 & 0 \end{pmatrix} \begin{pmatrix} V_{11} & 0 \\ 0 & I \end{pmatrix}^T \qquad (8)$$

where $A_{11} = U_{11}\Sigma_{11}V_{11}^T$ .

As the rank of the matrix is assumed to be k, there are k nonzero singular values. Inserting this singular value decomposition into the Schur decomposition gives a decomposition of A independent of $A_{22}$.

$$A = \begin{pmatrix} U_{11} \\ A_{21}A_{11}^{-1}U_{11} \end{pmatrix} \Sigma_{11} \begin{pmatrix} V_{11}^T & V_{11}^T A_{11}^{-1}A_{12} \end{pmatrix}$$

Since the size of the biggest nonzero minor in the matrix is known, the number of factors can be defined. In addition, $A_{21}$ determines all factors and $A_{12}$ determines all cofactors. Due to the Schur decomposition, there is no need to know or construct $A_{22}$ since all entries in the block $A_{22}$ may be calculated as product $A_{21}A_{11}^{-1}A_{12}$ . * These ideas provide a method, referred to herein as "Reverse Engineering", for filling the empty entries in the rating matrix R.

Incremental Matrix Factorisation

Use of matrix factorisation techniques is not new for this type of problem, but the focus of this embodiment is a new approach referred to herein as "Incremental Matrix Factorisation". This approach is based on two factorisation methods: singular value decomposition and Schur decomposition. Previous work has focussed on matrix factorisation techniques that, in their optimisation steps, have the same dimensionality for all data sets without distinguishing users and items with different amounts of ratings. Thus, for some users an optimisation problem is over-determined, while for others the optimisation problem is underdetermined. In this embodiment, an incremental procedure is introduced that allows reducing both the dimensionality and the uncertainty of the problem and yields a recommender system with high performance in view of dynamic adaptability.
The matrix $A$ is first constructed:

$$A \approx \begin{pmatrix} I & V^T \\ U & R \end{pmatrix}$$

Here R is the sparsely filled m x n matrix that contains all known ratings; $I$ is a $k \times k$ identity matrix; U and V are m $\times$ k and n x k matrices respectively.

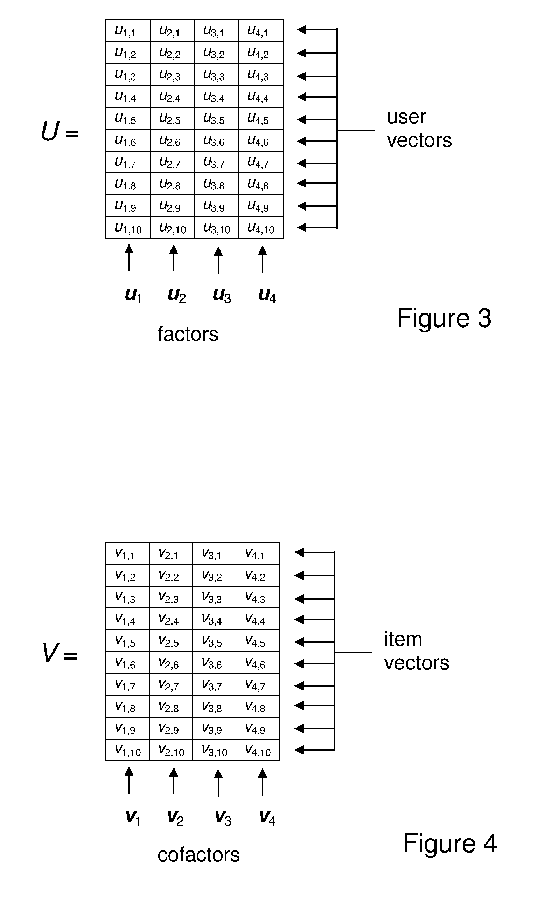

Figure 2 shows an example of matrix A for k = 4 and for the matrix R shown in Figure 1. Corresponding examples of matrices U and V are shown in Figures 3 and 4 respectively. Figure 3 illustrates that there are k = 4 factors $u_l$, each of length m = 10. The same matrix U may be considered to be made up of m = 10 user vectors, each of length k = 4. Similarly, Figure 4 illustrates that there are k = 4 cofactors $\mathbf{v}_l$, each of length n = 10. The same matrix V may be considered to be made up of n = 10 item vectors, each of length k = 4.
If the rank of $A$ is equal to the rank of $I$ (i.e., to k), then the Schur decomposition of the matrix A is the same as previously stated. The singular value decomposition for A is the following:

$$A = \begin{pmatrix} I & 0 \\ U & 0 \end{pmatrix} \begin{pmatrix} I & V^T \\ 0 & 0 \end{pmatrix}$$

Thus, finding U and V such that $R \approx UV^T$ means that factors and cofactors (or, equivalently, user vectors and item vectors) may be found. In this case the quadratic optimisation problem is written in the following way:

$$\min_{K} \| R - UV^T \|$$

where K is a set of known ratings in R. This is equivalent to the optimisation problem (1). In other words, it is desired to minimise the difference between the known ratings in R and the dot products of the corresponding user vectors and item vectors.
Importantly, the matrix R is split into S blocks $B_1 \dots B_S$ depending on the number of known values for each user and for each item. In the present embodiment, this splitting procedure is accomplished by permuting the rows and columns of the matrix R . Whilst the permutation of rows and columns aids the mathematical processing of the ratings data, it will be appreciated that this permutation is not essential. The key point is that the data is split into blocks by virtue of data density. Having split matrix R into blocks, all users and all items from block $B_1$ have at least $M_1$ ratings, all users and all items from block $B_2$ have at least $M_2$ ratings with $M_2 < M_1$ , and so on. Thus, in this embodiment, the user threshold value is equal to the item threshold value such that only a single threshold value $M_S$ is required for each stage s. Hence,

$B_1$ is the densest data block, $B_2$ is the second densest data block, ... , and $B_S$ is the least dense data block:

$$A = \begin{pmatrix} I & V^T \\ U & R \end{pmatrix} = \begin{pmatrix} I & V_1^T & V_2^T & \cdots \\ U_1 & B_1 & & \cdots \\ U_2 & & B_2 & \cdots \\ \vdots & \vdots & \vdots & \ddots \end{pmatrix}$$

The present method involves a series of stages.

A first stage of the method starts with the densest block $B_1$, and uses the iterative process described below to find $U_1$ and $V_1$ such that:

$$\min_{\mathcal{K} \cap B_1} \|B_1 - U_1 V_1^T\|$$

Then, in a second stage of the method, the next densest block $B_2$ is taken, and the block $B_1$ from the previous step is incremented.

$$A = \begin{pmatrix} I & V_1^T & V_2^T \\ U_1 & B_1 & \\ U_2 & & B_2 \end{pmatrix} = \begin{pmatrix} I & V_1^T & V_2^T \\ U_1 & A_{22}^{11} & A_{22}^{12} \\ U_2 & A_{22}^{21} & A_{22}^{22} \end{pmatrix}$$

It is then necessary to find $U_2$ and $V_2$ that satisfy:

$$\min_{\mathcal{K} \cap B_2} \left\| B_2 - \begin{pmatrix} U_1 \\ U_2 \end{pmatrix} \begin{pmatrix} V_1^T & V_2^T \end{pmatrix} \right\|$$

where $U_1$ and $V_1$ are given from the block $B_1$. If $A_{22}^{11}$ is a full rank block then this is equivalent to the optimisation problem:

$$\min_{\mathcal{K} \cap B_2} \left\| A_{22}^{22} - A_{22}^{21} (A_{22}^{11})^{-1} A_{22}^{12} \right\|$$

This incremental process is repeated for all blocks. In every block, the number of factors and cofactors is fixed and the prediction from the previous blocks is used.

Additionally the proposed incremental approach yields the possibility to get dynamically changing recommender systems by updating the recommender system regularly. When new ratings appear, a user-item pair may be able to be moved from the initial block $B_S$ to a denser one $B_{S-1}$. In this case, it is only necessary to recalculate the corresponding matrices of factors U and cofactors V for blocks $B_{S-1}$, ... , $B_S$. Thus, only $U_{S-1}$ ... $U_s$, and $V_{S-1}$... $V_s$ will be affected. The matrices of factors U and cofactors V for higher density data blocks will remain unaffected.

Using the incremental matrix factorisation techniques, it is assumed that the users' tastes depend linearly on the tastes of others and, also, that item ratings are linearly dependent as well. Moreover, the set of independent users/items has dimension k. Thus, the rating for an item is dependent on user behaviour and on how an item is rated in relation to others. This may give predicted values that are outside the rating scale (e.g., higher than 5 or less than 1 for a rating scale of 1 to 5). In fact, this is one of the advantages of the present method because items are really distinguished, e.g., an item with rating 5.9 should be appreciated more by a user than an item with rating 5.2. It is not necessary to use baseline predictions because the method itself takes care of deviations from the average for every user and every item simultaneously.

Iterative process

For every block $B_s$ (s = 1 ... S), an optimisation problem is solved to find the corresponding $U_s$ and $V_s$ (i.e. the user vectors and item vectors which correspond to users and items in that block). The reverse engineering approach provides a very simple iterative method, as described below. However, it will be appreciated that this is an exemplary way of solving the optimisation problem and should not be viewed as limiting.

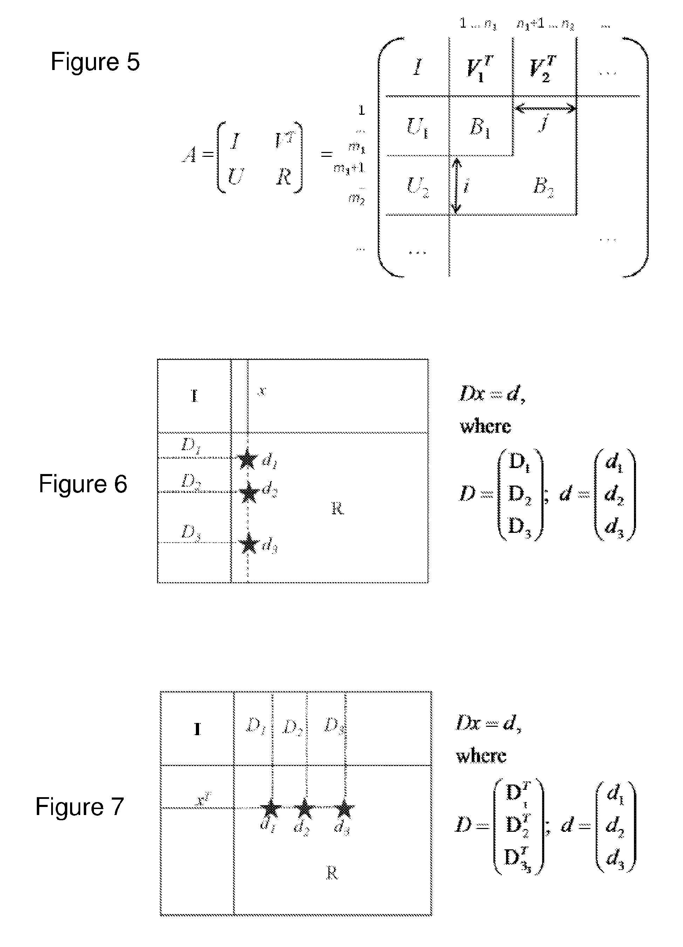

Figure 5 shows that the number of variables in the optimisation problem is $k$ ($n_s - n_{s-1} + m_s - m_{s-1}$), and the number of equations is $N_s$, where $N_s$ is the number of known ratings for all items and users in the $s^{th}$ block. To find the optimum of this problem, the following four-step iterative process of solving two linear systems of equations is applied. The entries of $V$ are denoted by $v_{jl}$, of $U$ by $u_{il}$ and of R by $r_{ij}$.

STEP 1: If s = 1, then $U_s$ is initialised randomly. Else (i.e., s > 1), then $U_1$ ... $U_{s-1}$ are known from the previous steps. $U_s$ refers to the user vectors for users in block s.

STEP 2: Fix $U_s$, where $U_s = \{u_{il}\}_{i=m_{s-1}+1 \ldots m_s}$. Then, for each column $j = n_{s-1} + 1 \ldots n_s$, there is a system of linear equations (see Figure 6):

$$D^{(j)} x^{(j)} = d^{(j)}$$

where

$$D^{(j)}_{p_j \times k_s} = \{u_{il} | l = 1 \ldots k_s \quad \& \quad i : r_{ij} \in \mathcal{K} \cap B_s\}$$

$$x^{(j)}_{k_s \times 1} = \{v_{jl} | l = 1 \ldots k_s\}$$

$$d_{p_j \times 1}^{(j)} = \{r_{ij} | i : r_{ij} \in \mathcal{K} \cap B_s\}$$

The number of unknowns in each system is $k_s$, the number of equations depends on the number of known values $p_j$ in the corresponding column j of R, i.e., $\sum_j p_j = N_j$ . . Thus there are three cases:

- Case 1: If *rank(D)* = *rank(D|d)* < k then the corresponding system has many solutions, and a regularisation term should be added or independent variables should be set to zero.
- Case 2: If *rank(D)* = *rank(D|d)* = k then the corresponding system has a unique solution.
- Case 3: If *rank(D)* = *rank(D|d)* > k or *rank(D)* ≠ *rank(D|d)* then the corresponding system has no solutions and the minimum norm Solution ‖ *Dx - d*‖ is found.

**STEP 3**: Fix $V_s$, where $V_s = \{v_{jl}\}_{j=n_{s-1}+1 \dots n_s}$. $V_s$ refers to the item vectors for items in block s. Then, for each row i = $m_{s-1}$ + 1 ... $m_s$ , there is a system of linear equations (see Figure 7):

$$D^{(i)} x^{(i)} = d^{(i)}$$

where

$$D_{k_s \times p_i}^{(i)} = \{v_{jl} | l = 1 \dots k_s \quad \& \quad j : r_{ij} \in \mathcal{K} \cap B_s\}$$

$$x_{k_s \times 1}^{(i)} = \{u_{il} | l = 1 \dots k_s\}^T$$

$$d_{p_i \times 1}^{(i)} = \{r_{ij} | j : r_{ij} \in \mathcal{K} \cap B_s\}$$

And there are again the three possible cases described above for step 2.

**STEP 4**: Repeat steps 2 and 3 until stop criterion is satisfied. The iterative process converts very fast and after a few iterations it is reasonable to stop.

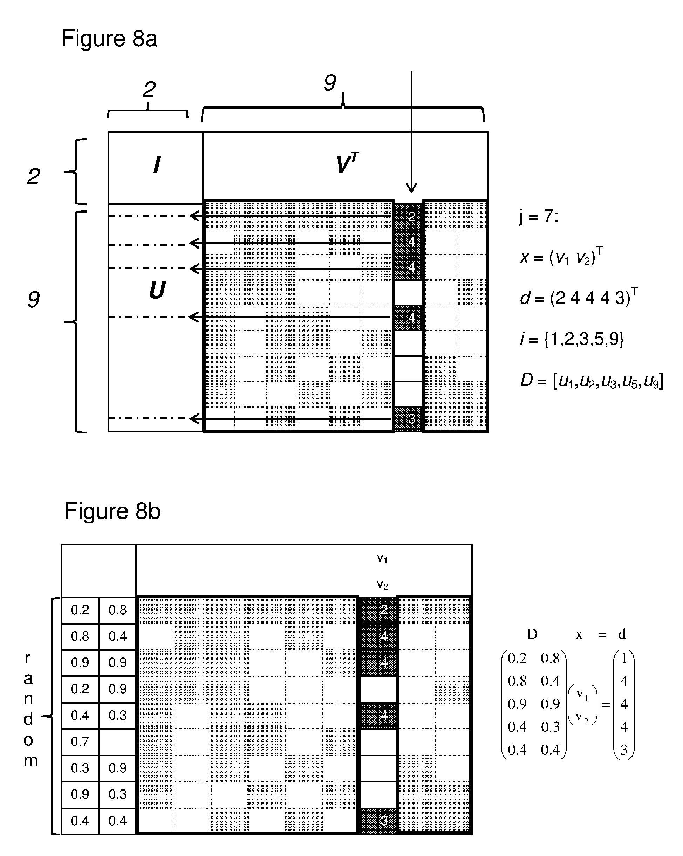

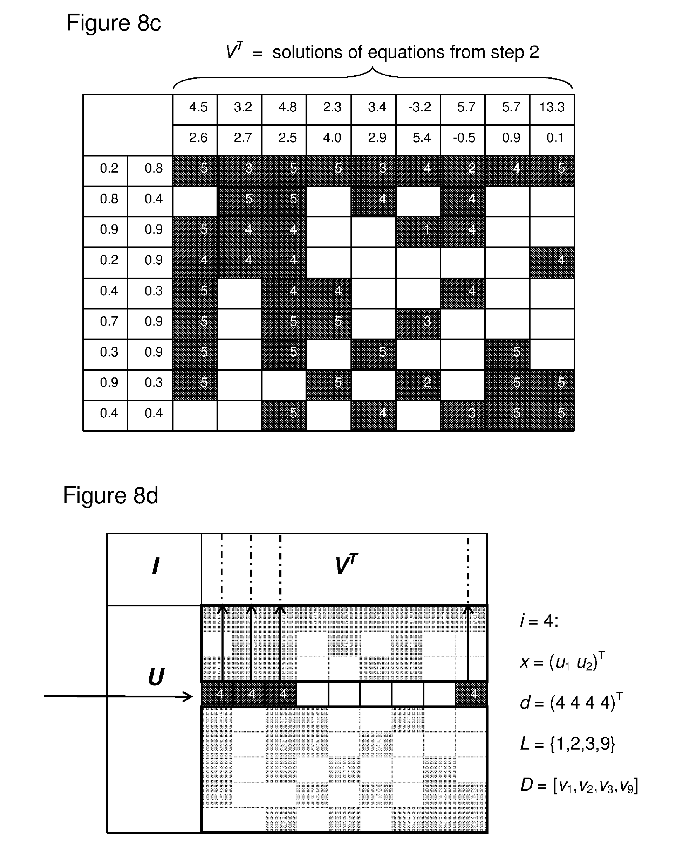

An example of the first part of the iterative process is shown in Figures 8a-8d for a system with k = 2, m = 9 and n = 9. Firstly, the values of U are randomly initialised as per step 1 of the iterative process. The randomly initialised values of U are clearly shown in Figure 8b. Then, in step 2 of the iterative process, these random values of U are fixed and a system of linear equations is solved to find the values of V. As an example, Figures 8a and 8b together show how the system of linear equations is set up for j = 7. There are five ratings for item *j* = 7 by user numbers 1, 2, 3, 5 and 9, so a system of five linear equations is solved to find the elements of V for item j = 7. The actual system of linear equations for *j* = 7 is shown on the right hand side of Figure 8b. Once similar systems of linear equations have been solved for each column j, the situation is as shown in Figure 8c where the values of U are still fixed at their initial random values, and the values of V have been found by solving the n systems of linear equations. At this stage, the first iteration of step 2 of the iterative process has been completed and so the process moves onto the first iteration of step 3. In this step, the values of V are fixed from the previous step, and a system of linear equations is solved to find the values of U. Figure 8d shows how the system of linear equations is set up for i = 4. There are four ratings by user i = 4 for item numbers 1, 2, 3 and 9, so a system of four linear equations is solved to find the elements of U for user $i = 4$. Once all values of U have been found, there is a check performed to see whether the stop criterion of step 4 has been satisfied. If so, the iterative process is complete. If not, a new iteration is started.

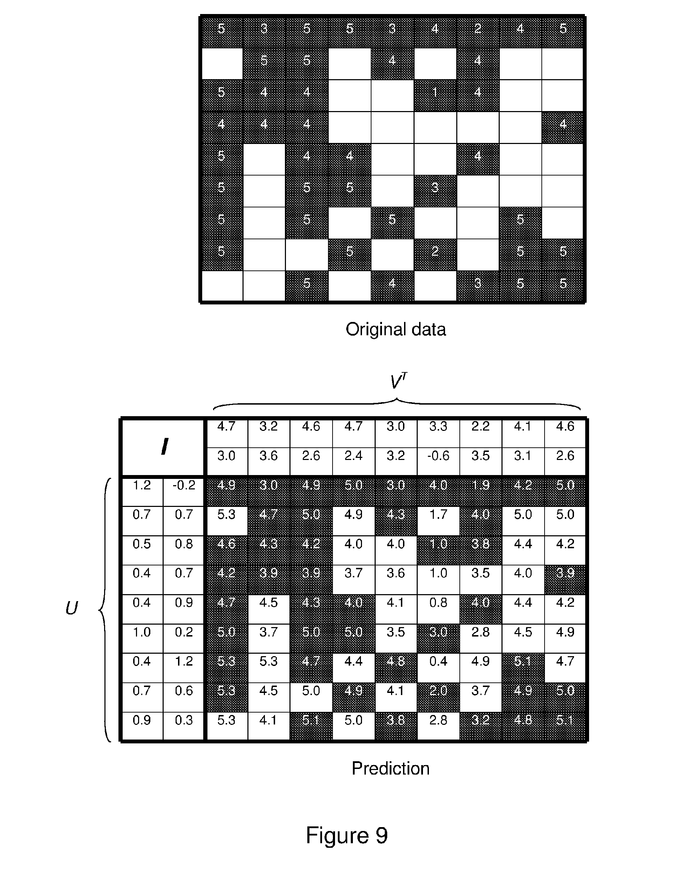

The results of the iterative process are shown in Figure 9. In particular, Figure 9 shows a comparison between the original ratings data and the predicted ratings. U and V are also shown in Figure 9.

Whilst the above example of the iterative process describes performing step 2 (in which $V_s$ is found by fixing $U_s$) followed by step 3 (in which $U_s$ is found by fixing $V_s$), it will be understood that these steps could alternatively be performed in reverse order. In this reverse embodiment, step 1 would involve a random initialisation of $V_s$ for s = 1. $U_s$ would not need to be randomly initialised in this embodiment.

In general, the value of k depends on the data set in question. *k* may be dependent on the number n of items of the number m of users to some extent. In addition, k is dependent on the density of known ratings in the data set. *k* is chosen experimentally.

With regard to Cases 1-3 in steps 2 and 3 of the iterative process, the balance between the number of equations and the number of unknowns may be viewed in a different way. The number of equations in each system depends on the number $p_i$ of known values in the corresponding row or column. Thus, the number of variables k may also be made dependent on this number and it may be varied for different rows and columns. Thus, for a particular block s, the value of k for that block (i.e. $k_s$) may be less than k. In practice, this is achieved by setting some of the k elements of the user vectors and item vectors to zero so as to reduce the dimensionality of the problem. Thus, there is a mechanism at hand to define the number of factors. Since it is desirable to avoid uncertainty, it is better to avoid Case 1 that the corresponding system has many solutions. All ratings are used twice for finding factors and cofactors so that the upper bound of $k_s$ is defined by:

$$k_s \leq \min_{\{i\}_s} \{p_i/2\}.$$

This equation gives an upper bound of $k \leq 2$ for the 9 x 9 example shown in Figures 8 and 9. In practice, for the densest blocks, the experimentally chosen $k_s$ is much less than the upper bound. However, for the last few blocks where users and items have very few known values (i.e. the upper bound on $k_s$ is small), the length of user and item vectors may effectively be reduced by setting some values to zero. The lower bound of $k_s$ depends on the quality of the data and the amount of independent information it consists. The value of k is given by the maximum value of $k_s$ over all blocks s.

Reliability of prediction is defined as the quantity and quality of the information in a block. The block approach allows distinguishing the reliability of the prediction. The denser the block, the more ratings there are for every item and every user, the more factors should be retrieved, and the more reliable and accurate the results of the prediction are in comparison to the less dense blocks.

Thus, the most reliable and accurate predicted block is the first block $B_1$ and the less reliable one is the last block $B_S$.

Evaluation

There are three publically available MovieLens data sets (http://www.grouplens.org/node/73) that can be used for evaluation. The second MovieLens data set is used for evaluation here. This data set contains ratings as explicit feedback from the users, information about the users and items with different properties and different sizes. Additionally, this data sets contain time stamps, which are not used in the present method. All users in the data set have rated at least 20 movies on a scale of 1 to 5. There are 1,000,209 ratings from 6,040 users on 3,593 items in the data set. The results presented here are found using the following predefined parameters:

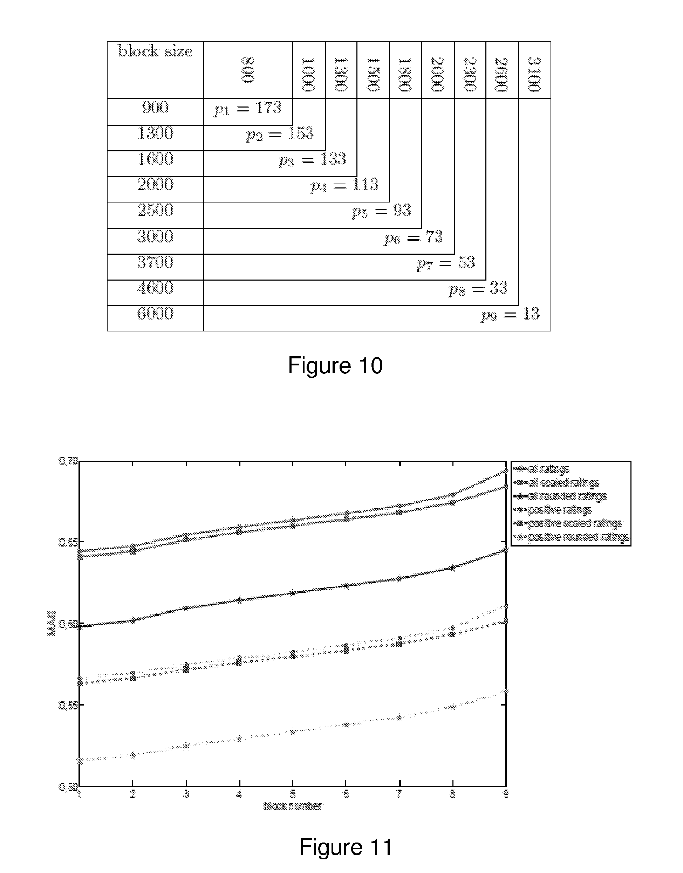

● The blocks were defined based on minimum numbers of ratings for every user and every item in the particular block (see the Table shown in Figure 10). Thus, for the first block this value is 173, for the second block the value is 153, and so on until the last block where the minimum number of ratings is 13. Predictions are generated for all users but not for all items as the minimum number of ratings for users is initially 20. There are nine blocks in total. The first block is the most densely populated with ratings, and the ninth block is the most sparsely filled. The first column in the Table of Figure 10 gives the rounded number of users in every block and the first row in the table gives the rounded number of items in every block.
● The number of factors is equal to nine.

● The Tikhonov regularisation constant is taken equal to 0.05.

These parameter values gave the best results for this particular data set. Optimal settings were found by manual tuning. The model was run 100 times, with 20% randomly removed every time.

Mean Average Error (MAE) and Root Mean Square Error (RMSE) are used as statistical measures for evaluation purposes.

$$\mathrm{MAE} = \frac{\sum_{i=1}^{N} |\, r_{pred} - r_{real} \,|}{N}$$

$$\mathrm{RMSE} = \sqrt{\frac{\sum_{i=1}^{N} (r_{pred} - r_{real})^2}{N}}$$

Figure 11 shows MAE for all ratings and MAE for positive ratings (ratings where the predicted values are $\geq$ 3) in three cases: "predicted", "scaled" and "rounded". The "predicted" values are those taken directly from the model. As previously mentioned, the predicted ratings can be higher than 5 or lower than 1. Thus, the "scaled" values are scaled such that all ratings are between 1 and 5. Of course, this decreases the MAE, as shown in Figure 11. The "rounded" values have been rounded to the nearest integer. Figure 11 shows that rounding decreases MAE even further. This happens because there are only integers in the test data set. Thus, on average, the predicted values are close to the real ones. Positive ratings have been evaluated separately because, for a recommender system, it is more important to correctly predict "good" items rather than "bad". In general, the data set is positive and contains 83% of positive ratings. The MAE for the positive ratings (using 156,000 data points) is less than the MAE for all ratings (using 200,000 data points).

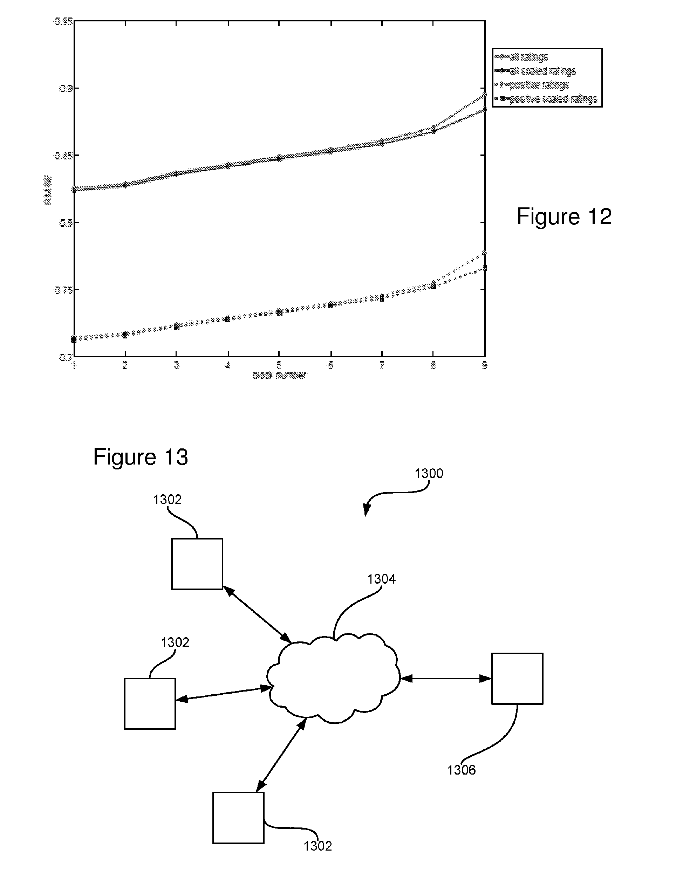

Figure 12 shows RMSE for all ratings and RMSE for positive ratings in two cases: "predicted" and "scaled". The "rounded" predictions are not included because rounding makes certain errors larger due to the nature of the RMSE, and the large errors are weighted more than the small errors.

Figures 11 and 12 show that MAE and RMSE increase as the data density within each block becomes more sparse. This confirms that reliability of the prediction depends on the density of ratings within a given data block.

Around 5% of the predicted ratings are higher than 5 or less than 1. The absolute values vary between 0 and 20. Predicted ratings contain about 15% of the values less or equal to 2 and about 20% higher or equal to 4. This corresponds to the rating distribution in the original data set and allows distinguishing "good" and "bad" items.

Rating-less recommender systems

As well as being suitable for rating based recommender systems, it should be noted that the present methodology may also be used for rating-less recommender systems. Rating-less recommender systems are systems that contain information without ratings. For example, a rating based recommender system for films may allow a user to rate films they have watched on a scale of 1 to 5. In contrast, a rating-less recommender system for films may simply indicate whether or not a user has watched particular films by having a "rating" of 1 for films that are known to have been watched, with all other entries being empty. The empty user-item pairs may or may not have been watched by the user. Another example of a rating-less recommender system concerns transactions. Such a system would contain entries where a user was known to have bought an item or used a specific service.

The present methodology may also be used for binary recommender systems in which, for example, entries of 0 may indicate user-item pairs where the user did not like the item, and entries of 1 may indicate user-item pairs where the user did like the item.

Complexity measure

In the present methodology, an optimisation problem is solved once for each block of data, so the total number of optimisations is equal to the total number of blocks S. This is not a lot. For each block $B_s$, the number of linear equations to be solved is $n_s - n_{s-1} + m_s - m_{s-1}$ with the maximal dimension $(p_{max})_s$ being equal to the maximal number of known elements in the row or column that are present in the block. Thus, the computational complexity to compute the factors and cofactors is $O(N^4)$, where N= max{m, $n$}. The number of iterations is neglected since it is relatively small. On a laptop (2.40 GHz) the method may be executed in less than a minute for the second MovieLens data set.

Furthermore, it is not necessary to calculate and store all missing entries in $R$. Only $A_{12}$ and $A_{21}$ are stored, making a total of $k$ ($n$ + m) entries. From this stored information, any required missing entries in R may be reproduced. Thus, the output of the method is factors and cofactors.

Summary

According to the above described embodiment, a new matrix factorisation methodology has been presented that allows the incremental generation of predictions starting from the densest part of the ratings data matrix. Splitting the ratings data into blocks allows an optimisation problem to be solved for each block using an iterative process. The dimensionality of the problem is also reduced in this way. The method has low complexity.

In the present embodiment, the reliability of the system has been linked with the density of the blocks considered at every iteration, making reliability an intrinsic part of the method. As intuitively expected the denser the block the more accurate the prediction. The most popular items and the most experienced users contain enough information to define key factors and cofactors, while other users and items can be characterised only by some factors and cofactors reducing the uncertainty of the problem.

The described embodiment has been evaluated using the publically available MovieLens data set, and shows good performance. The obtained results outperform existing methods that were evaluated on the same data set. The existing methods used for comparison are described in "Mixed Membership Matrix Factorization" by Mackey et al. (2010, Proceedings of the 27th International Conference on Machine Learning, Haifa, Israel), and "Predicting Missing Ratings in Recommender Systems: Adapted Factorization Approach" by Sappa et al. (International Journal of Electronic Commerce / Winter 2009Ü10, Vol. 14, No. 2, pp. 89Ü108).

The methodology of the described embodiment copes well and efficiently with dynamic situations. With time, new ratings appear and a user-item pair as entry in the matrix can be moved from an initial block to a denser one. In this case, only factors U and cofactors V for the current block and the blocks that are more sparse than it need be recalculated, while not touching the other (denser) blocks.

Implemetation

Figure 13 schematically illustrates a system 1300 according to an embodiment of the invention. The system 1300 comprises one or more user computer systems 1302 that are communicably connected to a recommender system 1306 via a network 1304. Whilst Figure 13 illustrates the system 1300 as comprising three user computer systems 1302, it will be appreciated that the system 1300 may comprise any other number of user computer systems 1302.

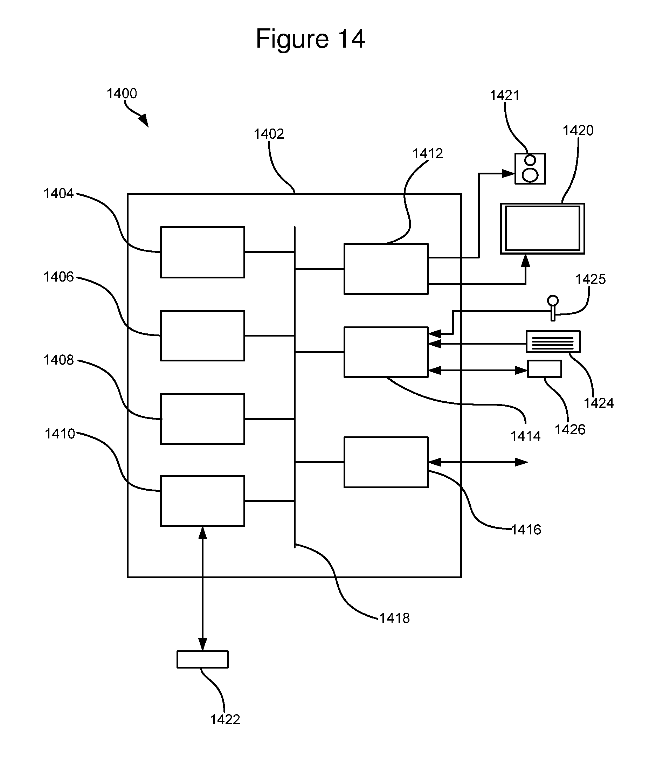

The user computer systems 1302 and the recommender system 1306 may each comprise one or more computer systems, examples of which shall be described below with reference to Figure 14.

The network 1304 may be any network capable of communicating data between a user computer system 1302 and the recommender system 1306. For example, the network 1304 may comprise one or more of: the internet, a local area network, a wide area network, a metropolitan area network, a broadcast network, a satellite communications network, a telephone network, etc.

In operation, a user (who may be a human or a machine) may make use of a user computer system 1302 to provide (via the network 1304) a rating (or recommendation value) of an item to the recommender system 1306. The recommender system 1306 may process such ratings in the manner described above. Moreover, the recommender system 1306 may generate and provide (via the network 1304) a recommendation value of an item to a user of a user computer system 1302 (again, in the manner described above). The recommender system 1306 may be arranged to provide such a recommendation value in response to receiving a corresponding request for a recommendation value that the user of the user computer system 1302 has provided (via the network 1304) to the recommender system 1306. For example, the recommender system 1306 may host a website comprising one or more webpages via which a user may provide recommendation values of particular items and/or request and receive item recommendation values that the recommender system 1306 has generated.

Figure 14 schematically illustrates an example computer system 1400 which may be used to form a data processing system forming the whole or a part of the recommender system 1306 and/or one or more of the user computer systems 1302.

The system 1400 comprises a computer 1402. The computer 1402 comprises: a storage medium 1404, a memory 1406, a processor 1408, a storage medium interface 1410, an output interface 1412, an input interface 1414 and a network interface 1416, which are all linked together over one or more communication buses 1418.

The storage medium 1404 may be any form of non-volatile data storage device such as one or more of a hard disk drive, a magnetic disc, an optical disc, a ROM, etc. The storage medium 1404 may store an operating system for the processor 1408 to execute in order for the computer 1402 to function. The storage medium 1404 may also store one or more computer programs (or software or instructions or code) that form part of an embodiment of the invention.

The memory 1406 may be any random access memory (storage unit or volatile storage medium) suitable for storing data and/or computer programs (or software or instructions or code) that form part of an embodiment of the invention.

The processor 1408 may be any data processing unit suitable for executing one or more computer programs (such as those stored on the storage medium 1404 and/or in the memory 1406) which have instructions that, when executed by the processor 1408, cause the processor 1408 to carry out a method according to an embodiment of the invention and configure the system 1400 to be a system according to an embodiment of the invention. The processor 1408 may comprise a single data processing unit or multiple data processing units operating in parallel, in cooperation with each other, or independently of each other. The processor 1408, in carrying out data processing operations for embodiments of the invention, may store data to and/or read data from the storage medium 1404 and/or the memory 1406.

The storage medium interface 1410 may be any unit for providing an interface to a data storage device 1422 external to, or removable from, the computer 1402. The data storage device 1422 may be, for example, one or more of an optical disc, a magnetic disc, a solid-state-storage device, etc. The storage medium interface 1410 may therefore read data from, or write data to, the data storage device 1422 in accordance with one or more commands that it receives from the processor 1408.

The input interface 1414 is arranged to receive one or more inputs to the system 1400. For example, the input may comprise input received from a user, or operator, of the system 1400; the input may comprise input received from a device external to or forming part of the system 1400. A user may provide input via one or more input devices of the system 1400, such as a mouse (or other pointing device) 1426 and/or a keyboard 1424, that are connected to, or in communication with, the input interface 1414. However, it will be appreciated that the user may provide input to the computer 1402 via one or more additional or alternative input devices. The system may comprise a microphone 1425 (or other audio transceiver or audio input device) connected to, or in communication with, the input interface 1414, the microphone 1425 being capable of providing a signal to the input interface 1414 that represents audio data (or an audio signal). The computer 1402 may store the input received from the/each input device 1424, 1425, 1426 via the input interface 1414 in the memory 1406 for the processor 1408 to subsequently access and process, or may pass it straight to the processor 1408, so that the processor 1408 can respond to the input accordingly.

The output interface 1412 may be arranged to provide a graphical/visual output to a user, or operator, of the system 1400. As such, the processor 1408 may be arranged to instruct the output interface 1412 to form an image/video signal representing a desired graphical output, and to provide this signal to a monitor (or screen or display unit) 1420 of the system 1400 that is connected to the output interface 1412. Additionally, or alternatively, the output interface 1412 may be arranged to provide an audio output to a user, or operator, of the system 1400. As such, the processor 1408 may be arranged to instruct the output interface 1412 to form an audio signal representing a desired audio output, and to provide this signal to one or more speakers 1421 of the system 1400 that is/are connected to the output interface 1412.

Finally, the network interface 1416 provides functionality for the computer 1402 to download data from and/or upload data to one or more data communication networks (such as the Internet or a local area network).

It will be appreciated that the architecture of the system 1400 illustrated in Figure 14 and described above is merely exemplary and that other computer systems 1400 with different architectures and additional and/or alternative components may be used in embodiments of the invention, and that not all of the components mentioned above may be present. For example, some or all of the input devices (e.g. the keyboard 1424, the microphone 1425 and the mouse 1426) and/or the output devices (e.g. the monitor 1420 and the speaker 1421) may be integral with the computer 1402, whilst others may be peripheral devices communicatively coupled to the computer 1402 (e.g. via a cable and/or wirelessly).

It will be appreciated that embodiments of the invention may be implemented using a variety of different information processing systems. In particular, although Figure 14 and the discussion thereof provide an exemplary computing architecture, this is presented merely to provide a useful reference in discussing various aspects of the invention. Of course, the description of the architecture has been simplified for purposes of discussion, and it is just one of many different types of architecture that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the system 1400 may be any type of computer system, such as one or more of: a games console, a set-top box, a personal computer system, a mainframe, a minicomputer, a server, a workstation, a notepad, a personal digital assistant, and a mobile telephone.

It will be appreciated that, insofar as embodiments of the invention are implemented by a computer program, then a storage medium and a transmission medium carrying the computer program form aspects of the invention. The computer program may have one or more program instructions, or program code, which, when executed by a computer (or a processor) carries out an embodiment of the invention. The term "program," as used herein, may be a sequence of instructions designed for execution on a computer system, and may include a subroutine, a function, a procedure, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

**Claims**

1. A method of generating a recommendation value for a specific user-item pair based on known recommendation values for other user-item pairs, wherein a user-item pair corresponds to one of m users and one of n items such that the recommendation value for said specific user-item pair is a recommendation value of a specific item of the n items for a specific user of the m users, wherein each user of the m users is associated with a corresponding user vector, and each item of the n items is associated with a corresponding item vector, the method comprising the steps of:

   generating the user vector associated with the specific user;
   generating the item vector associated with the specific item; and
   generating the recommendation value for the specific user-item pair based on a dot product of the user vector associated with the specific user and the item vector associated with the specific item;
   the method being **characterised by** the following steps for each stage in a series of stages, each stage having a respective item threshold value and a respective user threshold value, the item threshold value for a stage being less than the item threshold values for any preceding stages, and the user threshold value for a stage being less than the user threshold values for any preceding stages:

   (a) identifying selected users from the m users and selected items from the n items so as to define a subset of user-item pairs, wherein, for each selected user, the number of corresponding known recommendation values for user-item pairs in the subset is greater than the user threshold value, and wherein, for each selected item, the number of corresponding known recommendation values for user-item pairs in the subset is greater than the item threshold value;
   (b) for each selected user that has not been selected in any preceding stages, calculating the associated user vector based on known recommendation values for user-item pairs in the subset corresponding to said selected user and based on any corresponding item vectors calculated in any preceding stages; and
   (c) for each selected item that has not been selected in any preceding stages, calculating the associated item vector based on known recommendation values for user-item pairs in the subset corresponding to said selected item and based on any corresponding user vectors calculated in any preceding stages.

2. The method of claim 1 wherein, for at least one stage in the series, in the step (a):

   for each unselected user, the number of known recommendation values for user-item pairs not in the subset is less than or equal to the user threshold value, the unselected users being the users from the m users that are not selected to define the subset of user-item pairs; and
   for each unselected item, the number of known recommendation values for user-item pairs not in the subset is less than or equal to the item threshold value, the unselected items being the items from the n items that are not selected to define the subset of user-item pairs.

3. The method of claim 1 or claim 2 wherein, for at least one stage in the series, the steps (b) and (c) together comprise minimising the difference between known recommendation values for each user-item pair in the subset and corresponding dot products of the user vectors for the selected users and the item vectors for the selected items.

4. The method of any preceding claim wherein, for at least one stage in the series, there are one or more iterations of the steps (b) and (c) until a stop criterion is satisfied.

5. The method of claim 4 wherein, for at least one stage in the series, the plurality of iterations of the steps (b) and (c) commence with the step (b), wherein the first iteration of the step (b) further comprises calculating said associated user vector based on randomly initialised item vectors for those selected items that have not been selected in any preceding stages.

6. The method of claim 4 wherein, for at least one stage in the series, the plurality of iterations of the steps (b) and (c) commence with the step (c), wherein the first iteration of the step (c) further comprises calculating said associated item vector based on randomly initialised user vectors for those selected users that have not been selected in any preceding stages.

7. The method of any of claims 4 to 6 wherein, for at least one stage in the series, any iterations of the step (b) which follow a previous iteration of the step (c) further comprise calculating said associated user vector based on item vectors calculated in the previous iteration of the step (c).

8. The method of any of claims 4 to 7 wherein, for at least one stage in the series, any iterations of the step (c) which follow a previous iteration of the step (b) further comprise calculating said associated item vector based on any user vectors calculated in the previous iteration of the step (b).

9. The method of any preceding claim wherein the step (b) comprises solving a system of linear equations and wherein the step (c) comprises solving a system of linear equations.

10. The method of any preceding claim wherein, for each stage, the item threshold value is equal to the user threshold value such that only a single threshold value is required for each stage.

11. The method of any preceding claim wherein each user vector comprises k elements and each item vector comprises k elements, and wherein, for at least one stage in the series, the user vectors associated with the selected users and the item vectors associated with the selected items each have a constant number C of elements set to zero, where C is greater than or equal to 1.

12. The method of any preceding claim further comprising the steps of:

receiving a new known recommendation value for a user-item pair, wherein the new known recommendation value affects which users and items are selected in step (a) for each of stages s to S in the series, wherein stage S denotes the final stage in the series; and
for each of stages s to S in the series, performing the steps (a) to (c) again so as to update the calculated user vectors and item vectors based on the new known recommendation value.

13. A computer program which, when executed by a processor, causes the processor to carry out a method according to any one of claims 1 to 12.

14. A data carrying medium carrying a computer program according to claim 13.

15. An apparatus comprising a processor, the processor being configured to carry out a method according to any one of claims 1 to 12.

items

$$R =$$ users

$m$

$n$

## Figure 1

$$A =$$

| 1 | 0 | 0 | 0 | $v_{1,1}$ | $v_{1,2}$ | $v_{1,3}$ | $v_{1,4}$ | $v_{1,5}$ | $v_{1,6}$ | $v_{1,7}$ | $v_{1,8}$ | $v_{1,9}$ | $v_{1,10}$ |
|---|---|---|---|---|---|---|---|---|---|---|---|---|---|
| 0 | 1 | 0 | 0 | $v_{2,1}$ | $v_{2,2}$ | $v_{2,3}$ | $v_{2,4}$ | $v_{2,5}$ | $v_{2,6}$ | $v_{2,7}$ | $v_{2,8}$ | $v_{2,9}$ | $v_{2,10}$ |
| 0 | 0 | 1 | 0 | $v_{3,1}$ | $v_{3,2}$ | $v_{3,3}$ | $v_{3,4}$ | $v_{3,5}$ | $v_{3,6}$ | $v_{3,7}$ | $v_{3,8}$ | $v_{3,9}$ | $v_{3,10}$ |
| 0 | 0 | 0 | 1 | $v_{4,1}$ | $v_{4,2}$ | $v_{4,3}$ | $v_{4,4}$ | $v_{4,5}$ | $v_{4,6}$ | $v_{4,7}$ | $v_{4,8}$ | $v_{4,9}$ | $v_{4,10}$ |
| $u_{1,1}$ | $u_{2,1}$ | $u_{3,1}$ | $u_{4,1}$ | 5 | 5 | | 5 | 5 | 1 | 1 | | 1 | 1 |
| $u_{1,2}$ | $u_{2,2}$ | $u_{3,2}$ | $u_{4,2}$ | | 4 | 4 | 4 | 4 | 2 | 2 | 2 | | 2 |
| $u_{1,3}$ | $u_{2,3}$ | $u_{3,3}$ | $u_{4,3}$ | 4 | 4 | | 5 | 5 | 1 | 1 | 1 | 1 | |
| $u_{1,4}$ | $u_{2,4}$ | $u_{3,4}$ | $u_{4,4}$ | 5 | 5 | | 4 | 4 | | 2 | 2 | 2 | 2 |
| $u_{1,5}$ | $u_{2,5}$ | $u_{3,5}$ | $u_{4,5}$ | | 5 | 5 | 4 | 4 | 1 | | 1 | 1 | |
| $u_{1,6}$ | $u_{2,6}$ | $u_{3,6}$ | $u_{4,6}$ | | | 1 | 1 | 1 | | 5 | 5 | 5 | 5 |
| $u_{1,7}$ | $u_{2,7}$ | $u_{3,7}$ | $u_{4,7}$ | | | 2 | 2 | 2 | | | 4 | 4 | 4 |
| $u_{1,8}$ | $u_{2,8}$ | $u_{3,8}$ | $u_{4,8}$ | 2 | 2 | 2 | | | 4 | 4 | | 5 | 5 |
| $u_{1,9}$ | $u_{2,9}$ | $u_{3,9}$ | $u_{4,9}$ | 1 | 1 | | 1 | | | 4 | 4 | 5 | 5 |
| $u_{1,10}$ | $u_{2,10}$ | $u_{3,10}$ | $u_{4,10}$ | 1 | | 1 | | 1 | 5 | 5 | | 4 | 4 |

$k$

$m$

$k$

$n$

## Figure 2

$U =$

| $u_{1,1}$ | $u_{2,1}$ | $u_{3,1}$ | $u_{4,1}$ |
|---|---|---|---|
| $u_{1,2}$ | $u_{2,2}$ | $u_{3,2}$ | $u_{4,2}$ |
| $u_{1,3}$ | $u_{2,3}$ | $u_{3,3}$ | $u_{4,3}$ |
| $u_{1,4}$ | $u_{2,4}$ | $u_{3,4}$ | $u_{4,4}$ |
| $u_{1,5}$ | $u_{2,5}$ | $u_{3,5}$ | $u_{4,5}$ |
| $u_{1,6}$ | $u_{2,6}$ | $u_{3,6}$ | $u_{4,6}$ |
| $u_{1,7}$ | $u_{2,7}$ | $u_{3,7}$ | $u_{4,7}$ |
| $u_{1,8}$ | $u_{2,8}$ | $u_{3,8}$ | $u_{4,8}$ |
| $u_{1,9}$ | $u_{2,9}$ | $u_{3,9}$ | $u_{4,9}$ |
| $u_{1,10}$ | $u_{2,10}$ | $u_{3,10}$ | $u_{4,10}$ |

user vectors

$\boldsymbol{u}_1$ $\boldsymbol{u}_2$ $\boldsymbol{u}_3$ $\boldsymbol{u}_4$

factors

## Figure 3

$V =$

| $v_{1,1}$ | $v_{2,1}$ | $v_{3,1}$ | $v_{4,1}$ |
|---|---|---|---|
| $v_{1,2}$ | $v_{2,2}$ | $v_{3,2}$ | $v_{4,2}$ |
| $v_{1,3}$ | $v_{2,3}$ | $v_{3,3}$ | $v_{4,3}$ |
| $v_{1,4}$ | $v_{2,4}$ | $v_{3,4}$ | $v_{4,4}$ |
| $v_{1,5}$ | $v_{2,5}$ | $v_{3,5}$ | $v_{4,5}$ |
| $v_{1,6}$ | $v_{2,6}$ | $v_{3,6}$ | $v_{4,6}$ |
| $v_{1,7}$ | $v_{2,7}$ | $v_{3,7}$ | $v_{4,7}$ |
| $v_{1,8}$ | $v_{2,8}$ | $v_{3,8}$ | $v_{4,8}$ |
| $v_{1,9}$ | $v_{2,9}$ | $v_{3,9}$ | $v_{4,9}$ |
| $v_{1,10}$ | $v_{2,10}$ | $v_{3,10}$ | $v_{4,10}$ |

item vectors

$\boldsymbol{v}_1$ $\boldsymbol{v}_2$ $\boldsymbol{v}_3$ $\boldsymbol{v}_4$

cofactors

## Figure 4

Figure 5

Figure 6

$$Dx = d,$$
where
$$D = \begin{pmatrix} D_1 \\ D_2 \\ D_3 \end{pmatrix}; \quad d = \begin{pmatrix} d_1 \\ d_2 \\ d_3 \end{pmatrix}$$

Figure 7

$$Dx = d,$$
where
$$D = \begin{pmatrix} D_1^T \\ D_2^T \\ D_3^T \end{pmatrix}; \quad d = \begin{pmatrix} d_1 \\ d_2 \\ d_3 \end{pmatrix}$$

Figure 8a

$j = 7$:

$x = (v_1 \ v_2)^\top$

$d = (2\ 4\ 4\ 4\ 3)^\top$

$i = \{1,2,3,5,9\}$

$D = [u_1, u_2, u_3, u_5, u_9]$

Figure 8b

$$D \qquad x \quad = \quad d$$

$$\begin{pmatrix} 0.2 & 0.8 \\ 0.8 & 0.4 \\ 0.9 & 0.9 \\ 0.4 & 0.3 \\ 0.4 & 0.4 \end{pmatrix} \begin{pmatrix} v_1 \\ v_2 \end{pmatrix} = \begin{pmatrix} 1 \\ 4 \\ 4 \\ 4 \\ 3 \end{pmatrix}$$

## Figure 8c

$$V^T = \text{solutions of equations from step 2}$$

|     |     | 4.5 | 3.2 | 4.8 | 2.3 | 3.4 | -3.2 | 5.7 | 5.7 | 13.3 |
|-----|-----|-----|-----|-----|-----|-----|------|-----|-----|------|
|     |     | 2.6 | 2.7 | 2.5 | 4.0 | 2.9 | 5.4  | -0.5| 0.9 | 0.1  |
| 0.2 | 0.8 | 5 | 3 | 5 | 5 | 3 | 4 | 2 | 4 | 5 |
| 0.8 | 0.4 |   | 5 | 5 |   | 4 |   | 4 |   |   |
| 0.9 | 0.9 | 5 | 4 | 4 |   |   | 1 | 4 |   |   |
| 0.2 | 0.9 | 4 | 4 | 4 |   |   |   |   |   | 4 |
| 0.4 | 0.3 | 5 |   | 4 | 4 |   |   | 4 |   |   |
| 0.7 | 0.9 | 5 |   | 5 | 5 |   | 3 |   |   |   |
| 0.3 | 0.9 | 5 |   | 5 |   | 5 |   |   | 5 |   |
| 0.9 | 0.3 | 5 |   |   | 5 |   | 2 |   | 5 | 5 |
| 0.4 | 0.4 |   |   | 5 |   | 4 |   | 3 | 5 | 5 |

## Figure 8d

$i = 4:$

$x = (u_1 \ u_2)^\top$

$d = (4\ 4\ 4\ 4)^\top$

$L = \{1,2,3,9\}$

$D = [v_1, v_2, v_3, v_9]$

| 5 | 3 | 5 | 5 | 3 | 4 | 2 | 4 | 5 |
|---|---|---|---|---|---|---|---|---|
|   | 5 | 5 |   | 4 |   | 4 |   |   |
| 5 | 4 | 4 |   |   | 1 | 4 |   |   |
| 4 | 4 | 4 |   |   |   |   |   | 4 |
| 5 |   | 4 | 4 |   |   | 4 |   |   |
| 5 |   | 5 | 5 |   | 3 |   |   |   |
| 5 |   | 5 |   | 5 |   |   | 5 |   |
| 5 |   |   | 5 |   | 2 |   | 5 | 5 |
|   |   | 5 |   | 4 |   | 3 | 5 | 5 |

Original data

$V^T$

| $I$ | | 4.7 | 3.2 | 4.6 | 4.7 | 3.0 | 3.3 | 2.2 | 4.1 | 4.6 |
|---|---|---|---|---|---|---|---|---|---|---|
|   |   | 3.0 | 3.6 | 2.6 | 2.4 | 3.2 | -0.6 | 3.5 | 3.1 | 2.6 |
| 1.2 | -0.2 | 4.9 | 3.0 | 4.9 | 5.0 | 3.0 | 4.0 | 1.9 | 4.2 | 5.0 |
| 0.7 | 0.7 | 5.3 | 4.7 | 5.0 | 4.9 | 4.3 | 1.7 | 4.0 | 5.0 | 5.0 |
| 0.5 | 0.8 | 4.6 | 4.3 | 4.2 | 4.0 | 4.0 | 1.0 | 3.8 | 4.4 | 4.2 |
| 0.4 | 0.7 | 4.2 | 3.9 | 3.9 | 3.7 | 3.6 | 1.0 | 3.5 | 4.0 | 3.9 |
| 0.4 | 0.9 | 4.7 | 4.5 | 4.3 | 4.0 | 4.1 | 0.8 | 4.0 | 4.4 | 4.2 |
| 1.0 | 0.2 | 5.0 | 3.7 | 5.0 | 5.0 | 3.5 | 3.0 | 2.8 | 4.5 | 4.9 |
| 0.4 | 1.2 | 5.3 | 5.3 | 4.7 | 4.4 | 4.8 | 0.4 | 4.9 | 5.1 | 4.7 |
| 0.7 | 0.6 | 5.3 | 4.5 | 5.0 | 4.9 | 4.1 | 2.0 | 3.7 | 4.9 | 5.0 |
| 0.9 | 0.3 | 5.3 | 4.1 | 5.1 | 5.0 | 3.8 | 2.8 | 3.2 | 4.8 | 5.1 |

$U$

Prediction

Figure 9

| block size | 800 | 1000 | 1300 | 1500 | 1800 | 2000 | 2300 | 2600 | 3100 |
|---|---|---|---|---|---|---|---|---|---|
| 900 | $p_1 = 173$ | | | | | | | | |
| 1300 | | $p_2 = 153$ | | | | | | | |
| 1600 | | | $p_3 = 133$ | | | | | | |
| 2000 | | | | $p_4 = 113$ | | | | | |
| 2500 | | | | | $p_5 = 93$ | | | | |
| 3000 | | | | | | $p_6 = 73$ | | | |
| 3700 | | | | | | | $p_7 = 53$ | | |
| 4600 | | | | | | | | $p_8 = 33$ | |
| 6000 | | | | | | | | | $p_9 = 13$ |

Figure 10

Figure 11

Figure 12

Figure 13

# Figure 14

Europäisches
Patentamt

European
Patent Office

Office européen
des brevets

# EUROPEAN SEARCH REPORT

Application Number

EP 11 17 4265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRAND M: "Fast online SVD revisions for lightweight recommender systems", SIAM INTERNATIONAL CONFERENCE ON DATA MINING, 1 January 2003 (2003-01-01), pages 37-46, XP007920511, * sections 5 and 6 * | 1-15 | INV. G06F17/11 G06F17/30 G06Q30/02 |
| A | KOREN Y ET AL: "Matrix Factorization Techniques for Recommender Systems", COMPUTER, IEEE SERVICE CENTER, LOS ALAMITOS, CA, US, vol. 42, no. 8, 1 August 2009 (2009-08-01), pages 30-37, XP011271733, ISSN: 0018-9162, DOI: 10.1109/MC.2009.263 * page 32, right-hand column - page 33, left-hand column * | 1-15 | |

TECHNICAL FIELDS
SEARCHED (IPC)

G06F
G06Q

The present search report has been drawn up for all claims

| Place of search | Date of completion of the search | Examiner |
|---|---|---|
| Berlin | 17 April 2012 | Virnik, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning collaborative information filters. **BILLSUS ; PAZZANI.** International Conference on Machine Learning. Morgan Kaufmann Publishers, 1998
- **BILLSUS et al.** Adaptive interfaces for ubiquitous web access. *Communications of the ACM,* 2002, vol. 45 (5), 34-38
- **KOREN.** *The BellKor 2009 Solution to the Netflix Grand Prize,* August 2009, http://www.netflix-prize.com

- **BELL et al.** *The BellKor 2008 Solution to the Netflix Prize,* 2008, http://www.netflixprize.com
- **MACKEY et al.** Mixed Membership Matrix Factorization. *Proceedings of the 27th International Conference on Machine Learning,* 2010
- **SAPPA et al.** Predicting Missing Ratings in Recommender Systems: Adapted Factorization Approach. *International Journal of Electronic Commerce,* 2009, vol. 14 (2